(19) Europäisches Patentamt
European Patent Office
Office européen des brevets

(11) **EP 1 566 300 B1**

(12) **EUROPÄISCHE PATENTSCHRIFT**

(45) Veröffentlichungstag und Bekanntmachung des Hinweises auf die Patenterteilung:
**05.01.2011 Patentblatt 2011/01**

(51) Int Cl.:
***B60J 3/04*** *(2006.01)*

(21) Anmeldenummer: **05003230.9**

(22) Anmeldetag: **16.02.2005**

(54) **Kraftfahrzeug mit einer in der Transparenz einstellbaren Fensterscheibe**

Motor vehicle with a window pane having adjustable transparency

Panneau vitré à transparence réglable pour véhicule automobile

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **23.02.2004 US 546744 P**
**28.04.2004 US 566008 P**

(43) Veröffentlichungstag der Anmeldung:
**24.08.2005 Patentblatt 2005/34**

(73) Patentinhaber:
• **Volkswagen AG**
**38436 Wolfsburg (DE)**
• **AUDI AG**
**85045 Ingolstadt (DE)**

(72) Erfinder:
• **Matthai, Annegret**
**85045 Ingolstadt (DE)**
• **Stoschek, Arne**
**94303 Palo Alto,**
**California (US)**
• **Strohband, Sven**
**94043 Mountain View,**
**California (US)**

(56) Entgegenhaltungen:
DE-A1- 10 057 795    DE-A1- 19 814 094
DE-T1- 19 983 705    DE-U1- 29 908 859
JP-A- 10 208 194     JP-A- 2002 087 061
JP-A- 2003 136 957

**Beschreibung**

Die Erfindung betrifft ein Kraftfahrzeug mit einer Fensterscheibe zum Abdecken eines Innenraums des Kraftfahrzeuges, wobei eine Transparenz der Fensterscheibe einstellbar ist.

Fensterscheiben mit einer einstellbaren Transparenz sind z.B. aus der US 6 674 419, der US 6 597 412, der US 6 522446, der US 6 606 185, der US 6 301 040, der EP 0 608 203 B1, der Druckschrift BINE I/02, herausgegeben vom Fachinformationszentrum Karlsruhe, Gesellschaft für wissenschaftlich-technische Information mbH, sowie der Internetseite www.smartglass.com bekannt. Als nächsliegender Stand der Technik wird die DE 100 57 795 A1 angesehen.

Fensterscheiben mit einer einstellbaren Transparenz können z.B. von der FLABEG GmbH & Co. KG, Siemensstraße 3, 90766 Fürth, Deutschland oder der GESIMAT GmbH, Gesellschaft für intelligente Materialien und Technologien, Innovationspark Wuhlheide, Köpenicker Straße 325, 12555 Berlin, Deutschland bezogen werden.

Es ist Aufgabe der Erfindung, die Handhabbarkeit eines Kraftfahrzeuges zu verbessern.

Vorgenannte Aufgabe wird durch ein Kraftfahrzeug gemäß Anspruch 1 gelöst.

In einer Ausgestaltung der Erfindung umfasst ein vorgenannter Betriebszustand eine auf die Fensterscheibe einwirkende Sonneneinstrahlung. In einer weiteren Ausgestaltung der Erfindung umfasst die Steuerung ein Sonneneinstrahlungsmodul zur Erzeugung eines Steuersignals zur Einstellung der Transparenz der Fensterscheibe in Abhängigkeit eines Ausgangssignals eines Sensors zur Messung der auf die Fensterscheibe einwirkenden Sonneneinstrahlung.

In einer weiteren Ausgestaltung der Erfindung umfasst ein vorgenannter Betriebszustand ein Ausgangssignal eines Regensensors zur Messung von auf das Kraftfahrzeug einwirkendem Regen. In einer weiteren Ausgestaltung der Erfindung umfasst die Steuerung ein Regenmodul zur Erzeugung eines Steuersignals zur Einstellung der Transparenz, insbesondere höchster Transparenz, der Fensterscheibe in Abhängigkeit des Ausgangssignals des Regensensors.

In einer weiteren Ausgestaltung der Erfindung umfasst ein vorgenannter Betriebszustand eine außerhalb des Kraftfahrzeugs präsente Lichtmenge. In einer weiteren Ausgestaltung der Erfindung umfasst die Steuerung ein Außenlichtmodul zur Erzeugung eines Steuersignals zur Einstellung der Transparenz der Fensterscheibe in Abhängigkeit eines Ausgangssignals eines Lichtsensors zur Messung der außerhalb des Kraftfahrzeugs präsenten Lichtmenge. Der Steuerung wird dabei mindestens ein Signal mindestens eines Erfassungsmoduls zugeführt, wobei das Erfassungsmodul eine Information über eine auf mindestens eine Fensterscheibe einwirkende Meßgröße, insbesondere eine auf die Fensterscheibe einwirkende Sonneneinstrahlung oder Lichtmenge und/oder einen auf das Kraftfahrzeug einwirkenden Regen, in dem Ausgangssignal ausgibt.

In einer weiteren Ausgestaltung der Erfindung umfasst ein vorgenannter Betriebszustand einen Schaltzustand einer Lichtquelle, beispielsweise einer Glühlampe oder Leuchtdiode, insbesondere einer Nebelleuchte oder eines Nebelscheinwerfers. In einer weiteren Ausgestaltung der Erfindung umfasst die Steuerung ein Nebelmodul zur Erzeugung eines Steuersignals zur Einstellung der Transparenz, insbesondere höchster Transparenz, der Fensterscheibe in Abhängigkeit des Schaltzustandes der Nebelleuchte oder des Nebelscheinwerfers. Die Nebelleuchte ist dabei in der Regel im von aussen sichtbaren Heckbereich und der Nebelscheinwerfer in der Regel im von aussen sichtbaren Frontbereich des Fahrzeugs angeordnet. Der Steuerung wird dabei mindestens ein Signal mindestens eines Erfassungsmoduls zugeführt, wobei das Erfassungsmodul eine Information über einen Schaltzustand einer Lichtquelle, insbesondere einer Nebelleuchte oder eines Nebelscheinwerfers, in dem Ausgangssignal ausgibt.

In einer weiteren Ausgestaltung der Erfindung umfasst ein vorgenannter Betriebszustand einen Zustand einer Klimaanlage. In einer weiteren Ausgestaltung der Erfindung umfasst die Steuerung ein Temperaturmanagementmodul zur Erzeugung eines Steuersignals zur Einstellung der Transparenz der Fensterscheibe in Abhängigkeit des Zustandes der Klimaanlage.

In einer weiteren Ausgestaltung der Erfindung umfasst ein vorgenannter Betriebszustand einen Zustand eines Türschlosses. In einer weiteren Ausgestaltung der Erfindung umfasst die

Steuerung ein Schließmodul zur Erzeugung eines Steuersignals zur Einstellung der Transparenz der Fensterscheibe in Abhängigkeit des Zustandes des Türschlosses.

In einer weiteren Ausgestaltung der Erfindung umfasst ein vorgenannter Betriebszustand einen eingelegten Gang eines Getriebes. In einer weiteren Ausgestaltung der Erfindung umfasst die Steuerung ein Rückfahrmodul zur Erzeugung eines Steuersignals zur Einstellung der Transparenz der Fensterscheibe, insbesondere einer Rückscheibe, hinterer Seitenfenster oder aller Seitenfenster, in Abhängigkeit davon, ob ein Rückwärtsgang eingelegt ist. Wird der Rückwärtsgang durch einen anderen Gang ersetzt, so kann vorgesehen sein, dass die Fensterscheibe wieder ihren vorhergehenden Zustand annimmt. Der Steuerung wird dabei mindestens ein Signal mindestens eines Erfassungsmoduls zugeführt, wobei das Erfassungsmodul eine Information über einen Schaltzustand einer Innenbeleuchtung und/oder einer Türverriegelung und/oder eines eingelegten Vorwärts- oder Rückwärtsgangs eines Getriebes und/oder den Zustand einer in dem Kraftfahrzeug angeordneten Klimaanlage in dem Ausgangssignal ausgibt. So kann beispielsweise eine eingeschaltete Innenbeleuchtung zu einer veränderten Transparenz der Fensterscheibe führen, um diffuse Lichtverhältnisse zu erzeugen, durch welche eine visuell zu erfassende Information, beispielsweise den Text einer Tageszeitung, besser durch ihre gleichmäßigere Ausleuchtung erfassbar ist. Diese Transparenzsteuerung kann noch zusätzlich von einer außerhalb des Fahrzeugs vorherrschenden Lichtmenge abhängig sein, so dass z.B. bei Taglicht- und Nachtlichtverhältnissen unterschiedliche Transparenzwerte gewählt werden.

In einer weiteren Ausgestaltung der Erfindung umfasst ein vorgenannter Betriebszustand eine Belegung des Innenraums des Kraftfahrzeugs. In einer weiteren Ausgestaltung der Erfindung umfasst die Steuerung ein Belegungsmodul zur Erzeugung eines Steuersignals zur Einstellung der Transparenz der Fensterscheibe in Abhängigkeit der Belegung des Innenraums des Kraftfahrzeugs. Der Steuerung wird dabei mindestens ein Signal mindestens eines Erfassungsmoduls zugeführt, wobei das Erfassungsmodul eine Information über eine Belegung des Fahrzeuginnenraums, insbesondere eine Belegung der unterschiedlichen Sitze des Kraftfahrzeugs in dem Ausgangssignal ausgibt. Unter Belegung wird im Sinne diese Anmeldung auch eine Belegung oder Beladung im weiteren Sinn verstanden. Wenn beispielsweise der Kofferraum oder die Sitze mit Transportgegenständen, beispielsweise Koffer, Taschen oder Gepäck, Einkaufstüten, Kisten etc. belegt ist, kann die Transparenz der Fensterscheibe oder der Fensterscheiben herabgesetzt oder auf den niedrigsten Wert gesetzt werden, um beispielsweise den Einblick in das Fahrzeug zu vermindern bzw. zu verhindern. Somit können die Beladungsgegenstände außerhalb des Fahrzeugs nicht erkannt werden. Ebenso ist es ggf. nicht möglich festzustellen ob sich überhaupt Gegenstände im Fahrzeug befinden. Vom Benutzer des Fahrzeugs (Fahrzeugführer) kann dabei auch eine Transparenzeinstellung gewählt werden, um beispielsweise bewusst eine hohe Transparenz der Fensterscheiben auszuwählen, wenn sich keine oder nur wertlose Gegenstände im Fahrzeuginnenraum befinden. Dieses kann dazu dienen, Einbruchversuche von vornherein zu vermeiden, da von außerhalb des Fahrzeugs erkennbar ist, dass sich keine Wertgegenstände im Fahrzeuginneren befinden.

In einer weiteren Ausgestaltung der Erfindung umfasst ein vorgenannter Betriebszustand das Vorliegen eines Unfalls. In einer weiteren Ausgestaltung der Erfindung umfasst die Steuerung ein Unfallmanagementmodul zur Erzeugung eines Steuersignals zur Einstellung höchster Transparenz der Fensterscheibe bei Erkennung eines Unfalls. Der Steuerung wird dabei mindestens ein Signal mindestens eines Erfassungsmoduls zugeführt, wobei das Erfassungsmodul eine Information über eine Unfallsituation oder eine drohende Unfallsituation des Kraftfahrzeugs in dem Ausgangssignal ausgibt. Die Unfallsituation oder eine drohende Unfallsituation kann beispielsweise über Crash- oder Prechrashsensoren, Auslösezustände von Airbags, Abstandssensoren, Kameras etc. detektiert werden.

In einer weiteren Ausgestaltung der Erfindung umfasst ein vorgenannter Betriebszustand den geographischen Ort des Kraftfahrzeuges. In einer weiteren Ausgestaltung der Erfindung umfasst die Steuerung ein Ortsmodul zur Erzeugung eines Steuersignals zur Einstellung der Transparenz der Fensterscheibe in Abhängigkeit am geographischen Ort des Kraftfahrzeuges herrschender gesetzlicher Bestimmungen. Der Steuerung wird dabei mindestens ein Signal mindestens eines Erfassungsmoduls zugeführt, wobei das Erfassungsmodul eine Information über den aktuellen geographischen Orts des Kraftfahrzeugs enthält, wobei in Abhängigkeit des geographischen Orts die Transparenz der Fensterscheibe eingestellt wird.

In einer weiteren Ausführung der Erfindung wird dabei der Steuerung mindestens ein Signal mindestens eines Erfassungsmoduls zugeführt, wobei das Erfassungsmodul eine Information über eine eine Erschütterung des Kraftfahrzeugs oder der Karosserie des Kraftfahrzeugs oder einer Fensterscheibe in dem Ausgangssignal ausgibt. Dabei wird eine Transparenz erniedrigt oder auf den niedrigsten Wert eingestellt, wenn die Erschütterung des Kraftfahrzeugs oder der Karosserie des Kraftfahrzeugs oder das Erschütterungssignal mindestens einen Schwellwert überschreitet. Dabei kann es sich beispielsweise um einen Einbruchversuch eines stillstehenden Kraftfahrzeugs handeln, bei dem versucht wird, eine Scheibe einzuschlagen. Ebenso ist denkbar, dass versucht wird, eine Fahrzeugöffnung aufzubrechen oder dass ein Fahrzeug unter Beschuss gerät oder dass versucht wird ein Fahrzeug abzuschleppen. Die dabei hervorgerufenen Erschütterungen des Fahrzeugs weisen bestimmte Charakteristika auf, beispielsweise von Amplitude und Frequenzverlauf, sowie dem Ort der Quelle der Erschütterung. Diese lassen auf die genannten Situationen (z.B. Einschlagen der Scheibe, Beschuss der Scheibe oder des Fahrzeugs, Abschleppen des Fahrzeugs, Rütteln am Schloss oder der Tür) schließen. Die Erschütterung kann dabei über Sensoren direkt an der Scheibe, der Karosserie, den Fahrzeugöffnungen, z.B. Klappen, Deckel, Türen oder Abdeckungen und/oder der Federung bzw. den Stossdämpfer gemessen werden.

In de Erfindung umfasst die Steuerung ein Konfliktmanagementmodul zur Erzeugung eines Steuersignals zur Einstellung der Transparenz der Fensterscheibe in Abhängigkeit eines ersten Steuersignals zur Einstellung der Transparenz der Fensterscheibe in Abhängigkeit eines ersten Betriebszustandes und zumindest eines zweiten Steuersignals zur Einstellung der Transparenz der Fensterscheibe in Abhängigkeit eines zweiten Betriebszustandes. Die Steuerung umfasst dabei insbesondere ein Konfliktmanagementmodul zur Ausgabe eines Steuersignals in Abhängigkeit der Ausgangssignale von mindestens zwei Erfassungsmodulen, wobei das Konfliktmanagementmodul das Steuersignal in Abhängigkeit von mindestens zwei Ausgangssignalen der Erfassungsmodule einstellt. Das Konfliktmanagementmodul kann dabei als extra Modul realisiert sein oder direkt in die Steuerung integriert sein.

In einer weiteren Ausgestaltung der Erfindung umfasst die Fensterscheibe eine PALC Schicht und/oder eine SPD Schicht. Insbesondere umfasst die Fensterscheibe eine auf einer PALC Schicht angeordnete SPD Schicht. In einer weiteren Ausgestaltung der Erfindung ist dabei zwischen der PALC Schicht und der SPD Schicht eine PVB Schicht oder eine PU Schicht angeordnet. Zudem kann auf einer der PALC Schicht abgewandten Seite der SPD Schicht eine PVB Schicht und/oder auf einer der SPD Schicht abgewandten Seite der PALC Schicht eine PVB Schicht angeordnet sein.

Eine PALC Schicht kann abhängig von einer angelegten Spannung einen Zustand annehmen, in dem sie transparent ist, und einen Zustand annehmen, in dem sie opak ist. Geeignete PALC Schichten sind in der US 6 674 419 und der US 6 597 412 offenbart. PALC Schichten im Sinne der Ansprüche sollen insbesondere PALC Schichten im strengen Sinne sein, wie sie in der US 6 674 419 und der US 6 597 412 offenbart sind. PALC Schichten im Sinne der Ansprüche können aber auch ähnliche Schichten sein. PALC Schichten im Sinne der Ansprüche können auch generell Schichten sein, die abhängig von einer angelegten Spannung, insbesondere durch eine orthogonale Polarisierung von Licht, einen Zustand annehmen können, in dem sie transparent sind, und einen Zustand annehmen können, in dem sie opak sind.

Eine SPD Schicht kann abhängig von der Höhe einer angelegten Spannung eine unterschiedlich starke Tönung annehmen. Geeignete SPD Schichten sind in der US 6 522446 , der US 6 606 185 und der US 6 301 040 offenbart. SPD Schichten im Sinne der Ansprüche sollen insbesondere SPD Schichten im strengen Sinne sein, wie sie in der US 6 522446, der US 6 606 185 und der US 6 301 040 offenbart sind. SPD Schichten im Sinne der Ansprüche können aber auch ähnliche Schichten sein. SPD Schichten im Sinne der Ansprüche können auch generell Schichten sein, die abhängig von der Höhe einer angelegten Spannung eine unterschiedlich starke Tönung annehmen können.

In einer weiteren Ausgestaltung der Erfindung umfasst das Kraftfahrzeug mindestens einen Transparenzsensor zum Messen der Transparenz mindestens einer Fensterscheibe. Dieses Messsignal wird der Steuerung zugeführt, um den tatsächlich in der Fensterscheibe vorliegenden Transparenzwert zu bestimmen. Dieser Wert kann beispielsweise zur Korrektur des Sollwerts der Transparenz der Steuerung herangezogen werden.

In einer weiteren Ausbildung der Erfindung umfasst das Kraftfahrzeug eine Kalibriervorrichtung, wobei mindestens ein gemessener Transparenzwert der Kalibriervorrichtung oder der Steuerung zur automatischen Veränderung eines Steuerungssignals zur automatischen Veränderung der Transparenz der Fensterscheibe zuführbahr ist.

In einer weiteren Ausgestaltung der Erfindung umfasst das Kraftfahrzeug weiterhin einen, insbesondere mechanisch mit der Fensterscheibe verbundenen, Spannungskonverter zur Transformation der Spannung eines von der Steuerung erzeugbaren Steuersignals zur Einstellung der Transparenz der Fensterscheibe. In einer weiteren Ausgestaltung der Erfindung ist die Fensterscheibe auf und ab bewegbar. Geeignete Spannungskonverter können z.B. von der Endicott Research Group, Inc., 2601 Wayne St., Endicott NY 13760, USA bezogen werden. Ein besonders geeigneter Spannungskonverter ist der LSP 12-3-14 H Spannungskonverter der Endicott Research Group, Inc.. Der LSP 12-3-14 H Spannungskonverter transformiert eine 12V Gleichspannung in eine 120V Wechselspannung.

Vorgenannte Aufgabe wird zudem durch ein gepanzertes Kraftfahrzeug mit einer schussfesten Fensterscheibe, insbesondere einer schussfesten Rückscheibe bzw. eines schussfesten Seitenfensters, zum Abdecken eines Innenraums des gepanzerten Kraftfahrzeuges gelöst, wobei eine Transparenz der schussfesten Fensterscheibe einstellbar ist, und wobei das gepanzerte Kraftfahrzeug einen Erschütterungssensor zur Erfassung einer auf das gepanzerte Kraftfahrzeug und/oder die schussfeste Fensterscheibe einwirkenden Erschütterung und eine Steuerung zur automatischen Einstellung der Transparenz der schussfesten Fensterscheibe in Abhängigkeit eines Ausgangssignals des Erschütterungssensors aufweist. Dabei werden vorteilhafterweise die Fensterscheiben im rückwärtigen Teil des gepanzerten Kraftfahrzeuges im Sinne geringster Transparenz, insbesondere opak, eingestellt, wenn die Steuerung eine Erschütterung erkennt, die geeignet wäre, eine herkömmliche Fensterscheibe eines Kraftfahrzeuges zu zerstören bzw. die auf den Einschlag eines abgefeuerten Schusskörpers an dem Kraftfahrzeug hinweist. Eine weitere derartige Erschütterung kann z.B. auch ein schwerer Schlag oder das Auftreffen eines anderen Wurfkörpers (z.B. eines Steins oder eines Stocks) sein.

Ein gegenüber bekannten Kraftfahrzeugen verbessertes Kraftfahrzeug umfasst z.B. eine, insbesondere auf und ab bewegbare, Fensterscheibe zum Abdecken eines Innenraums des Kraftfahrzeuges, wobei eine Transparenz der Fensterscheibe einstellbar ist, und einen mechanisch mit der Fensterscheibe verbundenen Spannungskonverter zur Transformation der Spannung eines Steuersignals zur Einstellung der Transparenz der Fensterscheibe. Geeignete Spannungskonverter können z.B. von der Endicott Research Group, Inc., 2601 Wayne St., Endicott NY 13760, USA bezogen werden. Ein besonders geeigneter Spannungskonverter ist der LSP 12-3-14 H Spannungskonverter der Endicott Research Group, Inc.. Der LSP 12-3-14 H Spannungskonverter transformiert eine 12V Gleichspannung in eine 120V Wechselspannung.

Kraftfahrzeug im Sinne der Erfindung ist insbesondere ein individuell im Straßenverkehr benutzbares Landfahrzeug. Kraftfahrzeuge im Sinne der Erfindung sind insbesondere nicht auf Landfahrzeuge mit Verbrennungsmotor beschränkt.

Weitere Vorteile und Einzelheiten ergeben sich aus der nachfolgenden Beschreibung von Ausführungsbeispielen.

Fig. 1: zeigt ein Ausführungsbeispiel einer Steuerung zur automatischen Einstellung einer Transparenz einer Fensterscheibe eines Kraftfahrzeuges in Abhängigkeit eines Betriebszustandes des Kraftfahrzeuges;

Fig. 2: zeigt ein Ausführungsbeispiel eines Kraftfahrzeuges in einer Frontansicht;

Fig. 3:     zeigt ein Ausführungsbeispiel eines Kraftfahrzeuges in einer Seitenansicht;
Fig. 4:     zeigt ein Ausführungsbeispiel eines Kraftfahrzeuges in einer Draufsicht;
Fig. 5:     zeigt ein Ausführungsbeispiel einer Fensterscheibe eines Kraftfahrzeuges;
Fig. 6:     zeigt ein Ausführungsbeispiel einer PALC Schicht einer Fensterscheibe eines Kraftfahrzeuges;
Fig. 7:     zeigt ein Ausführungsbeispiel einer SPD Schicht einer Fensterscheibe eines Kraftfahrzeuges;
Fig. 8:     zeigt eine Detaildarstellung einer Steuerung zur automatischen Einstellung einer Transparenz einer Fensterscheibe eines Kraftfahrzeuges in Abhängigkeit eines Betriebszustandes des Kraftfahrzeuges;
Fig. 9:     zeigt einen Querschnitt einer Tür eines Kraftfahrzeuges;
Fig. 10:    zeigt einen vergrößerten Ausschnitt des Querschnitts der Tür gemäß Fig. 9;
Fig. 11:    zeigt ein Ausführungsbeispiel eines gepanzerten Kraftfahrzeuges in einer Seitenansicht; und
Fig. 12:    zeigt ein Ausführungsbeispiel einer Steuerung zur automatischen Einstellung einer Transparenz einer Fensterscheibe eines gepanzerten Kraftfahrzeuges.

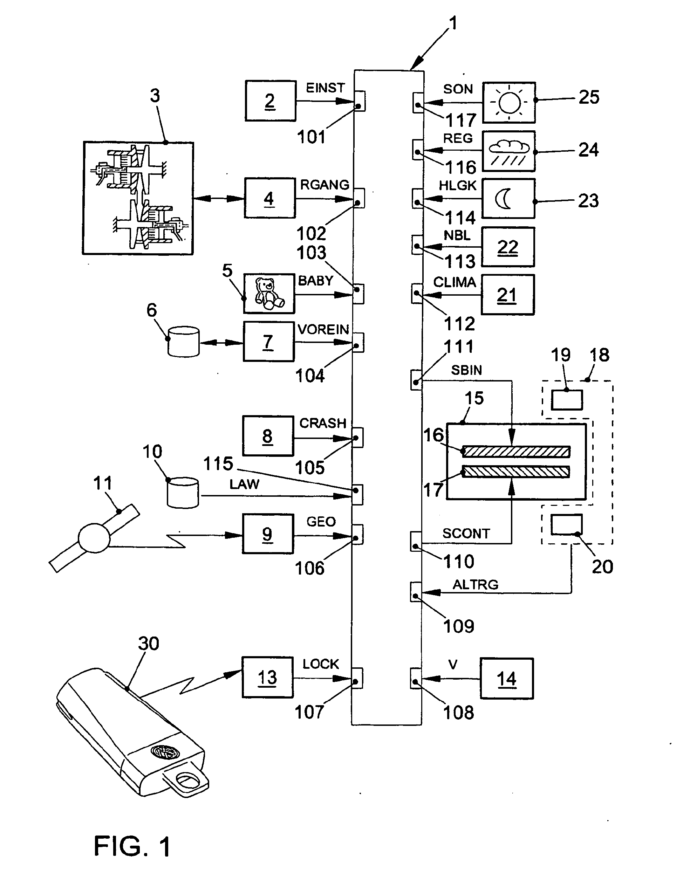

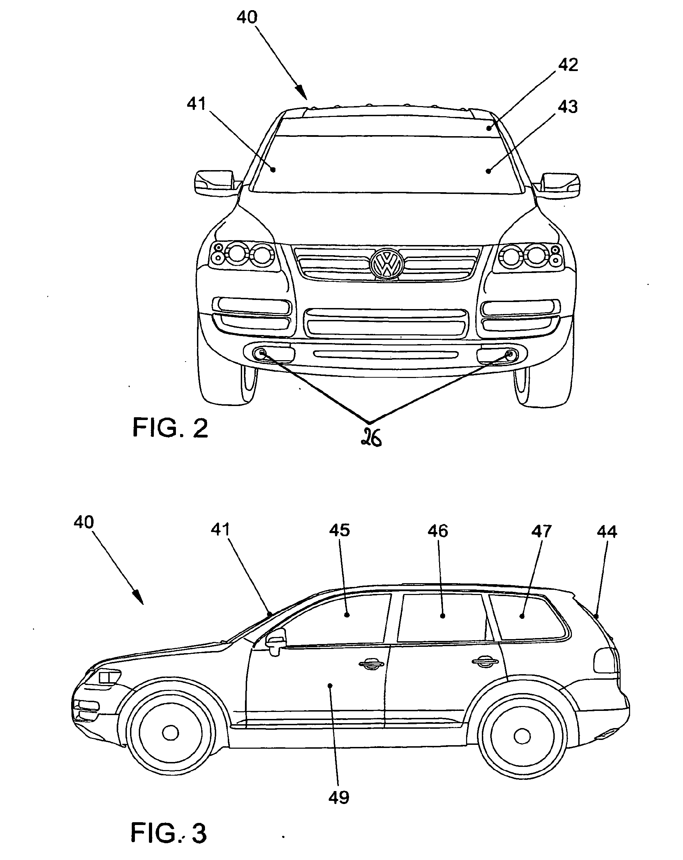

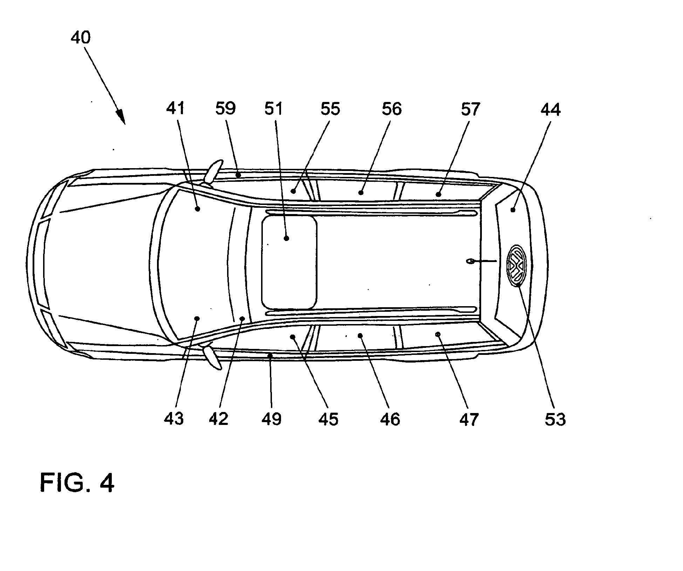

Fig. 1 zeigt ein Ausführungsbeispiel einer Steuerung 1 zur automatischen Einstellung einer Transparenz einer Fensterscheibe 15 eines in Fig. 2 in einer Frontansicht, in Fig. 3 in einer Seitenansicht und in Fig. 4 in einer Draufsicht dargestellten Kraftfahrzeuges 40 in Abhängigkeit eines Betriebszustandes des Kraftfahrzeuges 40. Dabei kann vorgesehen sein, dass die Fensterscheibe 15 gemäß Fig. 1 der Frontscheibe 41 des Kraftfahrzeuges 40, einem Teil der Frontscheibe 41 des Kraftfahrzeuges 40, wie zum Beispiel dem oberen Teil 42 der Frontscheibe 41 des Kraftfahrzeuges 40 und/oder dem unteren Teil 43 der Frontscheibe 41 des Kraftfahrzeuges 40, einem vorderen in einer Tür 49 bzw. 59 angeordneten Seitenfenster 45 bzw. 55 des Kraftfahrzeuges 40, einem mittleren Seitenfenster 46 bzw. 56 des Kraftfahrzeuges 40, einem hinteren Seitenfenster 47 bzw. 57 des Kraftfahrzeuges 40, der Rückscheibe 44 des Kraftfahrzeuges 40 und/oder dem Dachfenster 51 entspricht.

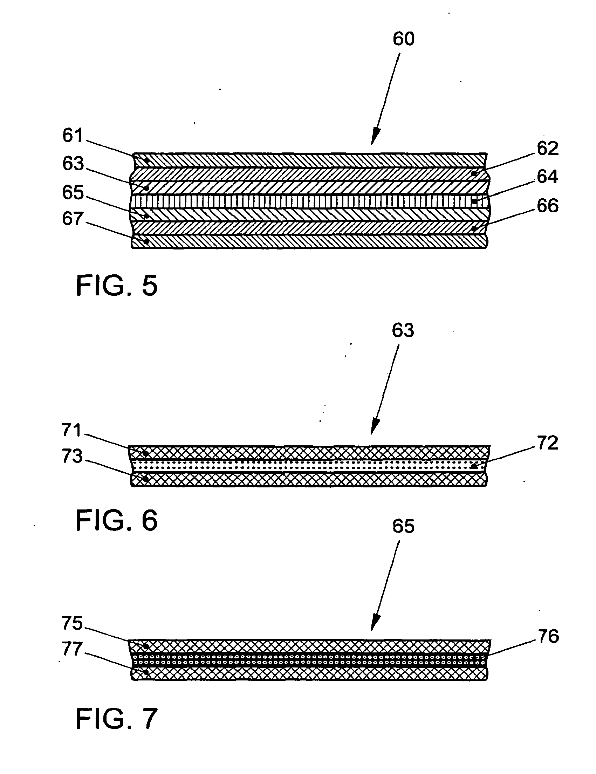

Die Fensterscheibe 15 kann eine PALC Schicht 16 und/oder eine SPD Schicht 17 umfassen. Die PALC Schicht 16 kann abhängig von einer - mit Bezugnahme auf Fig. 6 beschriebenen Elektroden - angelegten Spannung einen Zustand annehmen, in dem sie transparent ist, und einen Zustand annehmen, in dem sie opak ist. Geeignete PALC Schichten sind in der US 6 674 419 und der US 6 597 412 offenbart. Die SPD Schicht 17 kann abhängig von der Höhe einer -mit Bezugnahme auf Fig. 7 beschriebenen Elektroden - angelegten Spannung eine unterschiedlich starke Tönung annehmen. Geeignete SPD Schichten sind in der US 6 522446, der US 6 606 185 und der US 6 301 040 offenbart.

Fig. 5 zeigt einen Querschnitt einer Fensterscheibe 60 als ein bevorzugtes Ausführungsbeispiel der Fensterscheibe 15 gemäß Fig. 1, wobei Bezugzeichen 63 eine PALC Schicht und Bezugszeichen 65 eine SPD Schicht bezeichnet. Zwischen der PALC Schicht 63 und der SPD Schicht 65 ist eine Schicht 64 aus PVB oder PU angeordnet. Auf einer der SPD Schicht 65 abgewandten Seite der PALC Schicht 63 ist eine PVB Schicht 62 angeordnet. Auf einer der PALC Schicht 62 abgewandten Seite der PVB Schicht 62 ist wiederum eine Glasschicht 61 angeordnet. Zudem ist auf einer der PALC Schicht 63 abgewandten Seite der SPD Schicht 65 eine PVB Schicht 66 angeordnet. Auf einer der SPD Schicht 65 abgewandten Seite der PVB Schicht 66 ist wiederum eine Glasschicht 67 angeordnet.

Die PALC Schicht 63 weist - wie in Fig. 6 mittels eines Querschnitts durch die PALC Schicht 63 dargestellt - einen zwischen zwei Elektroden 71 und 73 angeordneten PALC Film 72 auf. Die SPD Schicht 65 weist -wie in Fig. 7 mittels eines Querschnitts durch die SPD Schicht 65 dargestellt - einen zwischen zwei Elektroden 75 und 77 angeordneten SPD Film 76 auf.

Der unter Bezugnahme auf Fig. 1 genannte Betriebszustand kann eine auf die Fensterscheibe 15 einwirkende Sonneneinstrahlung, eine außerhalb des Kraftfahrzeuges 40 präsente Lichtmenge, ein Zustand einer in dem Kraftfahrzeug 40 angeordneten Klimaanlage 21, ein Zustand eines Türschlosses 13 zum Öffnen einer Tür des Kraftfahrzeuges 40 mittels eines mit Bezugzeichen 30 bezeichneten Schlüssels, der geographische Ort des Kraftfahrzeuges 40 und/ oder eine Belegung des Innenraums des Kraftfahrzeugs 40 sein.

Das Kraftfahrzeug 40 weist einen der Fensterscheibe 15 zugeordneten Sonnenlichtsensor 25 zum Messen der auf die Fensterscheibe 15 einwirkenden Sonneneinstrahlung und zur Ausgabe eines entsprechenden Sonnenlichtsignals SON auf, das von der Steuerung 1 über eine Schnittstelle 117 eingelesen wird. Das Kraftfahrzeug 40 weist zudem einen Regensensor 24 zur Messung von auf das Kraftfahrzeug einwirkendem Regen auf. Der auf das Kraftfahrzeug einwirkende Regen bzw. ein entsprechendes Ausgangssignal RGN des Regensensors 24 kann ein unter Bezugnahme auf Fig. 1 genannter Betriebszustand sein. Das Ausgangssignal RGN des Regensensors 24 wird von der Steuerung 1 über eine Schnittstelle 116 eingelesen. Das Kraftfahrzeug 40 weist zudem einen Lichtsensor 23 zur Messung einer außerhalb des Kraftfahrzeuges 40 präsenten Lichtmenge und zur Ausgabe eines die außerhalb des Kraftfahrzeuges 40 präsente Lichtmenge repräsentierenden Ausgangssignals HLGK auf. Das Ausgangssignal HLGK des Lichtsensors 23 wird von der Steuerung 1 über eine Schnittstelle 114 eingelesen. Das Kraftfahrzeug 40 weist zudem eine Nebelleuchte 22 auf. Deren Schaltzustand NBL, also Ein oder Aus, wird von der Steuerung 1 über eine Schnittstelle 113 eingelesen. Dieser Schaltzustand NBL der Nebelleuchte 22 kann auch als eingangs unter Bezugnahme auf Fig. 1 genannter Betriebszustand verstanden werden.

Ein den Zustand der in dem Kraftfahrzeug 40 angeordneten Klimaanlage 21 repräsentierendes Signal CLIMA kann - über eine Schnittstelle 112 - ebenfalls von der Steuerung 1 eingelesen werden. Dieses Signal CLIMA kann z.B. die Menge zu- oder abzuführender Wärme bezeichnen. Zudem wird von der Steuerung 1 ein - den Zustand des Türschlosses 13 zum Öffnen einer Tür des Kraftfahrzeuges 40 mittels des Schlüssels 30 repräsentierendes - Signal LOCK über eine Schnittstelle 107 eingelesen.

Das Kraftfahrzeug 40 weist ein - z.B. auf Satelliten 11 gestütztes - Navigationssystem 9 zur Bestimmung des geographischen Ortes GEO des Kraftfahrzeuges 40 auf, der von der Steuerung 1 über eine Schnittstelle 106 eingelesen wird. Zudem ist eine Datenbank 10 vorgesehen, deren Informationen LAW von der Steuerung 1 über eine Schnittstelle 115 eingelesen werde können. Diese Informationen LAW beziehen sich auf gesetzliche Bestimmungen in einzelnen Orten, wie z.B. US Bundesstaaten, zur Transparenz bzw. Tönung von Scheiben von Kraftfahrzeugen. Bei dieser Funktion kann auch eine benutzerinteraktive Alternative vorgesehen werden, bei der ein Bediener des Kraftfahrzeuges gefragt wird, ob er einer Einstellung der ermittelten neuen Vorschriften vornehmen will, und eine automatische Anpassung nur dann erfolgt, wenn sie vom Bediener bestätigt wird.

Das Kraftfahrzeug 40 weist zudem Sensorik 8 zur Erkennung eines Unfalls und zur Ausgabe eines entsprechenden Ausgangssignals CRASH auf, das von der Steuerung 1 über eine Schnittstelle 105 eingelesen werden kann. Das Vorliegen bzw. das Nicht-Vorliegen eines Unfalls kann ein eingangs genannter Betriebszustand sein.

Das Kraftfahrzeug 40 weist weiterhin eine Personenerkennung 7 zur Erkennung einer Person in dem Kraftfahrzeug 40 bzw. dessen Belegung auf. Eine derartige Personenerkennung 7 kann z.B. zur Sitzvoreinstellung verwendet werden. Dazu greift die Personenerkennung 7 auf in einer Datenbank 6 gespeicherte Daten zurück. Von der Steuerung 1 werden von der Personenerkennung 7 übermittelte Informationen VOREIN zur Voreinstellung der Fensterscheibe 15 entsprechend einer erkannten Person über eine Schnittstelle 104 eingelesen. Ändert sich die Voreinstellung der Fensterscheibe 15 für die erkannte Person, so kann die Steuerung 1 dies an die Personenerkennung 7 übertragen.

Das Kraftfahrzeug 40 weist zudem eine, z.B. als Kamera und/oder Drucksensor implementierte, Kleinkinderkennung 5 zur Ausgabe eines eine Belegung eines Sitzes durch ein Kleinkind anzeigenden Signals BABY auf, das von der Steuerung 1 über eine Schnittstelle 103 eingelesen werden kann. Ein vorgenannter Drucksensor kann z.B. von der Firma IEE International Electronics & Engineering S.A., Zone Industrielle - FINDEL, 2b, route de Trèves, L-2632 Luxembourg, Luxembourg bezogen werden.

Das Kraftfahrzeug 40 weist weiterhin eine Getriebesteuerung 4 zur Steuerung eines Getriebes 3 auf. Ein eingelegter Gang des Getriebes 3 kann ein eingangs genannter Betriebszustand sein. Von der Getriebesteuerung 4 erhält die Steuerung 1 über eine Schnittstelle 102 ein Signal RGANG, das angibt, ob ein Rückwärtsgang eingelegt ist oder nicht.

Das Kraftfahrzeug 40 weist zudem einen Transparenzsensor 18 mit einer LED 19 und einer Photodiode 20 zum Messen der Transparenz der Fensterscheibe 15 auf. Der Transparenzsensor 18 liefert ein Ausgangssignal ALTRG über die Transparenz der Fensterscheibe 15, das von der Steuerung 1 über eine Schnittstelle 109 eingelesen werden kann.

Zudem ist eine Eingabevorrichtung 2 zur manuellen Einstellung der Transparenz der Fensterscheibe 15 mittels eines Signals EINST vorgesehen, das von der Steuerung 1 über eine Schnittstelle 101 eingelesen werden kann. Über eine Schnittstelle 108 der Steuerung 1 kann eine von einer Steuerung 14 ausgegebene Geschwindigkeit v des Kraftfahrzeuges 40 eingelesen werden. Eine solche Eingabevorrichtung kann z.B. eine in einer Mittelkonsole angeordnete Eingabevorrichtung zur (separaten) Einstellung der Transparenz aller in Bezug auf ihre Transparenz einstellbaren Fensterscheiben umfassen. Die Eingabevorrichtung 2 kann auch zusätzlich oder alternativ z.B. eine im hinteren Bereich angeordnete Eingabevorrichtung zur Einstellung der Transparenz eines hinteren Seitenfensters 46 oder 56 umfassen. Die Eingabevorrichtung 2 kann auch zusätzlich oder alternativ z.B. eine Eingabevorrichtung zur Einstellung bestimmter (auswählbarer) Kombinationen bzw. Voreinstellungen der Transparenz von in Bezug auf ihre Transparenz einstellbaren Fensterscheiben umfassen.

Es kann vorgesehen sein, dass das Kraftfahrzeug 40 nur einen Teil der vorgenannten Komponenten 2, 4, 5, 7, 8, 9, 13, 14, 20, 21, 22, 23, 24 und 25 zur Bereitstellung von Signalen für die Steuerung 1 aufweist. In Abhängigkeit der Signale dieser Komponenten 2, 4, 5, 7, 8, 9, 13, 14, 20, 21, 22, 23, 24 und 25 oder eines Teils dieser Komponenten 2, 4, 5, 7, 8, 9, 13, 14, 20, 21, 22, 23, 24 und 25 ermittelt die Steuerung 1 Steuersignale SBIN und SCONT zur Steuerung der PALC Schicht 16 bzw. der SPD Schicht 17 und gibt diese über entsprechende Schnittstellen 110 und 111 aus.

Das Steuersignal SBIN kann z.B. folgendes Format haben:

$$SBIN = \begin{bmatrix} SIDELEFTFRONT\_BIN \\ SIDELEFTPASS\_BIN \\ SIDELEFTTRK\_BIN \\ SIDERIGHTFRONT\_BIN \\ SIDERIGHTPASS\_BIN \\ SIDERIGHTTRK\_BIN \\ FRONTOT\_BIN \\ FRONTUT\_BIN \\ REAR\_BIN \\ ROOF\_BIN \end{bmatrix}$$

Dabei ist - soweit vorgesehen - SIDELEFTFRONT_BIN ein binäres (EIN/AUS) Steuersignal zur Ansteuerung einer PALC Schicht in dem linken vorderen Seitenfenster 45, SIDELEFTPASS_BIN ein binäres (EIN/AUS) Steuersignal zur Ansteuerung einer PALC Schicht in dem linken mittleren Seitenfenster 46, SIDELEFTTRK_BIN ein binäres (EIN/AUS) Steuersignal zur Ansteuerung einer PALC Schicht in dem linken hinteren Seitenfenster 47, SIDERIGHTFRONT_BIN ein binäres (EIN/AUS) Steuersignal zur Ansteuerung einer PALC Schicht in dem rechten vorderen Seitenfenster 55, SIDERIGHTPASS_BIN ein binäres (EIN/AUS) Steuersignal zur Ansteuerung einer PALC Schicht in dem rechten mittleren Seitenfenster 56, SIDERIGHTTRK_BIN ein binäres (EIN/AUS) Steuersignal zur Ansteuerung einer PALC Schicht in dem rechten hinteren Seitenfenster 57, FRONTOT_BIN ein binäres (EIN/AUS) Steuersignal zur Ansteuerung einer PALC Schicht in dem oberen Teil 42 der Frontscheibe 41, FRONTUT_BIN ein binäres (EIN/AUS) Steuersignal zur Ansteuerung einer PALC Schicht in dem unteren Teil 43 der Frontscheibe 41, REAR_BIN ein binäres (EIN/AUS) Steuersignal zur Ansteuerung einer PALC Schicht in der Rückscheibe 44, und ROOF_BIN ein binäres (EIN/AUS) Steuersignal zur Ansteuerung einer PALC Schicht in dem Dachfenster 51.

Das Steuersignal SCONT kann z.B. folgendes Format haben:

$$SCONT = \begin{bmatrix} SIDELEFTFRONT\_CONT \\ SIDELEFTPASS\_CONT \\ SIDELEFTTRK\_CONT \\ SIDERIGHTFRONT\_CONT \\ SIDERIGHTPASS\_CONT \\ SIDERIGHTTRK\_CONT \\ FRONTOT\_CONT \\ FRONTUT\_CONT \\ REAR\_CONT \\ ROOF\_CONT \end{bmatrix}$$

Dabei ist - soweit vorgesehen - SIDELEFTFRONT_CONT ein Steuersignal zur Ansteuerung einer SPD Schicht in dem linken vorderen Seitenfenster 45, SIDELEFTPASS_CONT ein Steuersignal zur Ansteuerung einer SPD Schicht in dem linken mittleren Seitenfenster 46, SIDELEFTTRK_CONT ein Steuersignal zur Ansteuerung einer SPD Schicht in dem linken hinteren Seitenfenster 47, SIDERIGHTFRONT_CONT ein Steuersignal zur Ansteuerung einer SPD Schicht in dem rechten vorderen Seitenfenster 55, SIDERIGHTPASS_CONT ein Steuersignal zur Ansteuerung einer SPD Schicht in dem rechten mittleren Seitenfenster 56, SIDERIGHTTRK_CONT ein Steuersignal zur Ansteuerung einer SPD Schicht in dem rechten hinteren Seitenfenster 57, FRONTOT_CONT ein Steuersignal zur Ansteuerung einer SPD Schicht in dem oberen Teil 42 der Frontscheibe 41, FRONTUT_CONT ein Steuersignal zur Ansteuerung einer SPD Schicht in dem unteren Teil 43 der Frontscheibe 41, REAR_CONT ein Steuersignal zur Ansteuerung einer SPD Schicht in der Rückscheibe 44, und ROOF_CONT ein Steuersignal zur Ansteuerung einer SPD Schicht in dem Dachfenster 51.

Die Schnittstellen 101, 102, 103, 104, 105, 106, 107, 108, 109, 110, 111, 112, 113, 114, 115, 116 und 117 können unterschiedliche Hardware-Schnittstellen oder lediglich Software-Schnittstellen eines Bussystems sein

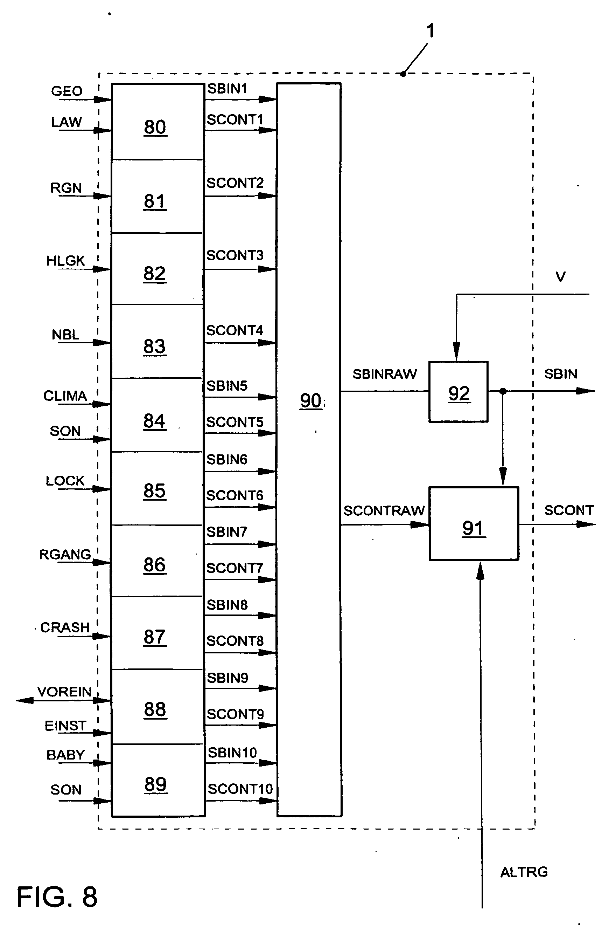

Fig. 8 zeigt eine Detaildarstellung der Steuerung 1. Die Steuerung 1 umfasst ein Ortsmodul 80 zur Erzeugung eines Steuersignals SBIN1 und eines Steuersignals SCONT1 zur Einstellung der Transparenz der Fensterscheiben 41, 44, 45, 46, 47, 51, 55, 56, 57 in Abhängigkeit am geographischen Ort GEO des Kraftfahrzeuges 40 herrschender gesetzlicher Bestimmungen (übermittelt als Informationen LAW). Die Steuersignale SBIN1 und SCONT1 bilden dabei Vorschläge des Ortsmoduls 80 für die Steuersignale SBIN und SCONT. Das Steuersignal SBIN1 entspricht dabei in seinem Format dem Steuersignal SBIN, wobei jedoch die binäre Angabe EIN oder AUS durch die Möglichkeit ‚keine Angabe' erweitert ist.

Das Steuersignal SCONT1 besitzt folgendes Format:

$$SCONT1 = \begin{bmatrix} SIDELEFTFRONT\_CONT & OP \\ SIDELEFTPASS\_CONT & OP \\ SIDELEFTTRK\_CONT & OP \\ SIDERIGHTFRONT\_CONT & OP \\ SIDERIGHTPASS\_CONT & OP \\ SIDERIGHTTRK\_CONT & OP \\ FRONTOT\_CONT & OP \\ FRONTUT\_CONT & OP \\ REAR\_CONT & OP \\ ROOF\_CONT & OP \end{bmatrix}$$

Das Format der ersten Spalte von SCONT1 entspricht dem Format von SCONT, wobei jedoch das kontinuierliche Steuersignal durch die Möglichkeit ‚keine Angabe' erweitert ist. Zudem ist eine weitere Spalte mit einer Variablen OP vorgesehen, die =, <, >, ≤, ≥ oder ‚keine Angabe' annehmen kann und angibt, in welcher Beziehung eine Zeile von SCONT zu der entsprechenden Zeile von SCONT1 steht. So bedeutet < in einer Zeile, dass der Wert von SCONT in dieser Zeile kleiner sein sollte als der in dieser Zeile angegebene Wert von SCONT1.

Die Steuerung 1 umfasst weiterhin ein Regenmodul 81 zur Erzeugung eines Steuersignals SCONT2 zur Einstellung der Transparenz der Fensterscheiben 41, 44, 45, 46, 47, 51, 55, 56, 57 in Abhängigkeit des Ausgangssignals RGN des Regensensors 24, ein Außenlichtmodul 82 zur Erzeugung eines Steuersignals SCONT3 zur Einstellung der Transparenz der Fensterscheiben 41, 44, 45, 46, 47, 51, 55, 56, 57 in Abhängigkeit eines Ausgangssignals HLGK des Lichtsensors 23 und ein Nebelmodul 83 zur Erzeugung eines Steuersignals SCONT4 zur Einstellung der Transparenz der Fensterscheiben 41, 44, 45, 46, 47, 51, 55, 56, 57 in Abhängigkeit des Schaltzustandes NBL der Nebelleuchte 22. Dabei wird bei Nebel, Regen und abnehmender Helligkeit außerhalb des Kraftfahrzeuges die Transparenz der Fensterscheiben 41, 44, 45, 46, 47, 51, 55, 56, 57, z.B. auf ihren Maximalwert, erhöht.

Die Steuerung 1 umfasst zudem ein Temperaturmanagementmodul 84 zur Erzeugung eines Steuersignals SBIN5 und eines Steuersignals SCONT5 zur Einstellung der Transparenz der Fensterscheiben 44, 46, 47, 51, 56, 57 in Abhängigkeit des den Zustand der in dem Kraftfahrzeug 40 angeordneten Klimaanlage 21 repräsentierenden Signals CLIMA und gegebenenfalls des Signals SON. Dabei wird bei starker Kühlung die die Transparenz verringert und bei starkem Heizen und präsenter Sonneneinstrahlung die Transparenz der Fensterscheiben 44, 46, 47, 51, 56, 57 erhöht.

Die Steuerung 1 umfasst außerdem ein Schließmodul 85 zur Erzeugung eines Steuersignals SBIN6 und eines Steuersignals SCONT6 zur Einstellung geringster Transparenz aller Fensterscheiben 41, 44, 45, 46, 47, 51, 55, 56, 57, wenn das Signal LOCK ein Verschließen des Kraftfahrzeuges 40 anzeigt. Zudem kann vorgesehen werden, dass die Steuersignale SBIN6 und/oder SCONT6 im Sinne eines Blinkens zwischen höchster und geringster Transparenz erzeugt werden, um einem Bediener eine Eingabe (Öffnen oder Schließen) mittels des Schlüssels 30 zu bestätigen. Zudem kann vorgesehen werden, dass die Steuersignale SBIN6 und/oder SCONT6 im Sinne Streifen für Streifen abnehmender Transparenz beim Entriegeln und/oder im Sinne Streifen für Streifen zunehmender Transparenz beim Verriegeln erzeugt werden.

Die Steuerung 1 umfasst weiterhin ein Rückfahrmodul 86 zur Erzeugung eines Steuersignals SBIN7 und eines Steuersignals SCONT7 zur Einstellung geringster Transparenz der Rückscheibe 44, wenn das Signal RGANG angibt, dass ein Rückwärtsgang eingelegt ist.

Die Steuerung 1 umfasst ein Unfallmodul 87 zur Erzeugung eines Steuersignals SBIN8 und eines Steuersignals SCONT8 zur Einstellung höchster Transparenz aller Fensterscheiben 41, 44, 45, 46, 47, 51, 55, 56, 57, wenn das Signal CRASH angibt, dass es zu einem Unfall gekommen ist.

Die Steuerung 1 umfasst ein Voreinstellungsmodul 88 zur Erzeugung eines Steuersignals SBIN9 und eines Steuersignals SCONT9 zur Einstellung der Transparenz der Fensterscheiben 41, 44, 45, 46, 47, 51, 55, 56, 57 entsprechend der Informationen VOREIN zur Voreinstellung der Fensterscheiben 41, 44, 45, 46, 47, 51, 55, 56, 57 entsprechend einer erkannten Person. Ändert sich die Voreinstellung einer Fensterscheibe 41, 44, 45, 46, 47, 51, 55, 56 oder 57 für die erkannte Person, z.B. durch manuelle Einstellung der Transparenz dieser Fensterscheibe 41, 44, 45, 46, 47, 51, 55, 56 oder 57 mittels des Signals EINST, so gibt das Voreinstellungsmodul 88 entsprechende Informationen VOREIN aus.

Die Steuerung 1 umfasst ein Sonneneinstrahlungsmodul 89 zur Erzeugung eines Steuersignals SBIN10 und eines Steuersignals SCONT10 zur Einstellung der Transparenz einer von starker Sonneneinstrahlung betroffenen Fensterscheibe 41, 44, 45, 46, 47, 51, 55, 56 oder 57 in Abhängigkeit des Ausgangssignals SON des Sonnenlichtsensors 25 zur Messung der auf die betreffende Fensterscheibe 41, 44, 45, 46, 47, 51, 55, 56 bzw. 57 einwirkenden Sonneneinstrahlung und des eine Belegung eines Sitzes im Bereich der betreffenden Fensterscheibe 41, 44, 45, 46, 47, 51, 55, 56 bzw. 57 durch ein Kleinkind anzeigenden Signals BABY. Dabei wird die Transparenz bei Sonneneinstrahlung verringert, jedoch nur bedingt im unteren Teil 43 der Frontscheibe 41. Zudem ist vorgesehen, dass der untere Teil nicht (bedingt durch das Steuersignal SBIN10) opak wird. Zudem wird die Transparenz bei Sonneneinstrahlung und Erkennung eines Kleinkindes stärker verringert.

Die Steuerung weist ein Konfliktmanagementmodul 90, zur Ausgabe eines Steuersignals SBINRAW in Abhängigkeit der Steuersignale SBIN1, SBIN5, SBIN6, SBIN7, SBIN8, SBIN9 und SBIN10 und eines Steuersignals SCONTRAW in Abhängigkeit der Steuersignale SCONT1, SCONT2, SCONT3, SCONT4, SCONT5, SCONT6, SCONT7, SCONT8, SCONT9 und SCONT10 auf. Das Steuersignal SBINRAW entspricht in seinem Format dem Steuersignal SBIN. Das Steuersignal SCONTRAW entspricht in seinem Format dem Steuersignal SCONT.

Die Zeilen des Steuersignals SBINRAW entsprechen den entsprechenden Zeilen der Steuersignale SBIN1, SBIN5, SBIN6, SBIN7, SBIN8, SBIN9 und SBIN10. Ist eine Zeile für alle Steuersignale SBIN1, SBIN5, SBIN6, SBIN7, SBIN8, SBIN9 und SBIN10 mit ,keine Angabe' belegt, so erhält die entsprechende Zeile in SBINRAW den Wert ,EIN', d.h. nicht-opak. Widersprechen sich einzelne Zeilen der Steuersignale SBIN1, SBIN5, SBIN6, SBIN7, SBIN8, SBIN9 und SBIN10, so gilt das Steuersignal SBIN1, SBIN5, SBIN6, SBIN7, SBIN8, SBIN9 und SBIN10 mit der höchsten Priorität, wobei SBIN8 die höchste und SBIN6 die zweithöchste Priorität hat. Die Priorität von SBIN10 ist von dem Signal BABY abhängig. Es können für einige der Steuersignale SBIN1, SBIN5, SBIN6, SBIN7 oder SBIN9 auch gleiche Prioritäten vergeben werden und der jeweilige Vorrang voreinander situationsabhängig oder zufallsmäßig entschieden werden.

Die Zeilen des Steuersignals SBINRAW entsprechen den entsprechenden Zeilen der Steuersignale SCONT1, SCONT2, SCONT3, SCONT4, SCONT5, SCONT6, SCONT7, SCONT8, SCONT9 und SCONT10. Ist eine Zeile für alle Steuersignale SCONT1, SCONT2, SCONT3, SCONT4, SCONT5, SCONT6, SCONT7, SCONT8, SCONT9 und SCONT10 mit keine Angabe' belegt, so ist die entsprechende Zeile im Sinne größter Transparenz einzustellen. Widersprechen sich einzelne Zeilen der Steuersignale SCONT1, SCONT2, SCONT3, SCONT4, SCONT5, SCONT6, SCONT7, SCONT8, SCONT9 oder SCONT10, so gilt das Steuersignal SCONT1, SCONT2, SCONT3, SCONT4, SCONT5, SCONT6, SCONT7, SCONT8, SCONT9 bzw. SCONT10 mit der höchsten Priorität, wobei SCONT8 die höchste Priorität hat. Die Priorität von SCONT10 ist von dem Signal BABY abhängig. Bleibt eine Zeile aufgrund der Variablen OP mit $<$, $>$, $\leq$, $\geq$ unbestimmt, so wird der Wert für die entsprechende Zeile angenommen, der durch die Variable OP mit $<$, $>$, $\leq$, $\geq$ formulierte Bedingung gerade erfüllt. Es können für einige der Steuersignale SCONT1, SCONT2, SCONT3, SCONT4, SCONT5, SCONT6, SCONT7, SCONT9 bzw. SCONT10 auch gleiche Prioritäten vergeben werden und der jeweilige Vorrang voreinander situationsabhängig oder zufallsmäßig entschieden werden.

Es kann vorgesehen sein, dass einzelne PALC Schichten und/oder einzelne SPD Schichten im Sinne einzeln ansteuerbarer Segmente segmentiert sind. Derartige Segmente können z.B. zur Darstellung von Emblemen wie dem in Fig. 4 dargestellten Emblem 53 genutzt werden. Sind z.B. in der neunten Zeile alle Steuersignale SBIN1, SBIN5, SBIN6, SBIN7, SBIN8, SBIN9 und SBIN10 und/oder alle Steuersignale SCONT1, SCONT2, SCONT3, SCONT4, SCONT5, SCONT6, SCONT7, SCONT8, SCONT9 und SCONT10 mit ,keine Angabe' belegt, so kann vorgesehen sein, dass die neunte Zeile der Steuersignale SBIN und SCONT Werte zur Erzeugung des Emblems 53 enthält.

Die Steuerung 1 umfasst eine Kalibriervorrichtung 91 zur automatischen Veränderung eines mittels der Steuerung 1 erzeugten Steuerungssignals SCONTRAW in Abhängigkeit des Ausgangssignals ALTRG des Transparenzsensors 18, des Steuersignals SCONTRAW und des Steuersignals SBIN. Dabei wird das Steuersignal SCONTRAW bzw. eine entsprechende Zeile des Steuersignals SCONTRAW mit einem die Alterung einer entsprechenden Fensterscheibe 41, 44, 45, 46, 47, 51, 55, 56 oder 57 entsprechenden Kompensationsfaktor multipliziert und als Steuersignal SCONT ausgegeben.

Die Steuerung 1 umfasst zudem eine - gegebenenfalls auf separater Sicherheitshardware und gegebenenfalls mit eigener Not-Energieversorgung implementierte - Sicherheitsvorrichtung 92, die verhindert, dass der untere Teil 43 der Frontscheibe 41 opak wird, wenn die Geschwindigkeit v des Kraftfahrzeuges 40 ungleich null ist. Mit dieser Ausnahme entspricht das Steuersignal SBIN dem Steuersignal SBINRAW.

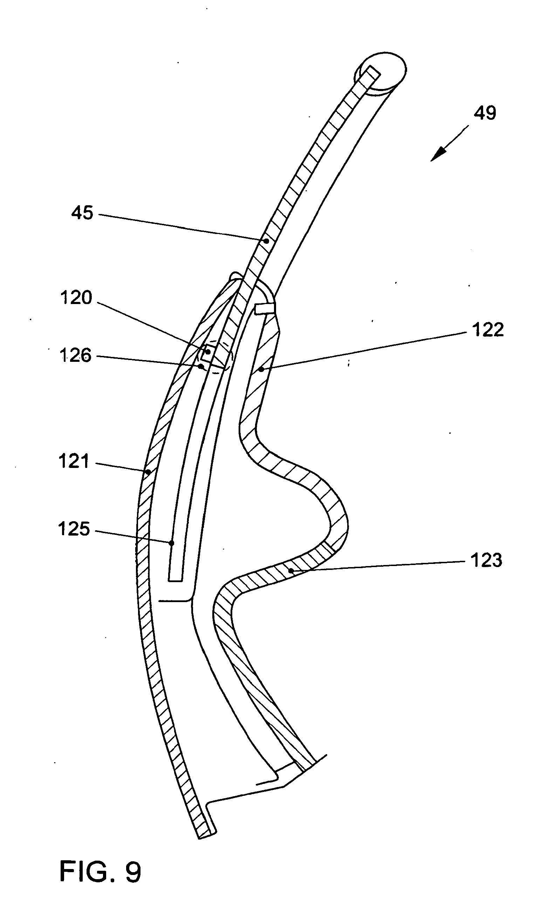

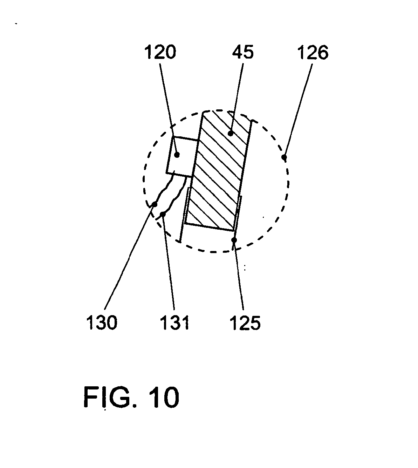

Fig. 9 zeigt einen Querschnitt der Tür 49 des Kraftfahrzeuges 40, und Fig. 10 zeigt einen vergrößerten mit einem in Fig. 9 mit Bezugszeichen 126 bezeichneten Kreis gekennzeichneten Ausschnitt des Querschnitts der Tür 49. Die Tür 49 weist eine mit Bezugszeichen 121 bezeichnete Außenverkleidung und eine mit Bezugszeichen 122 und 123 bezeichnete Innenverkleidung auf. Zwischen der Außenverkleidung 121 und der Innenverkleidung 122 bzw. 123 ist eine Führung 125 angeordnet, in der das Seitenfenster 45 auf und ab bewegbar ist.

Auf dem Seitenfenster 45 ist ein mechanisch (und elektrisch) mit dem Seitenfenster 45 verbundener Spannungskonverter 120 zur Transformation der Spannung des von der Steuerung 1 erzeugbaren Steuersignals SBIN und/oder SCONT angeordnet. Der Spannungskonverter 120 ist dazu über (aus Gründen der Übersichtlichkeit in Fig. 9 nicht dargestellten) Zuleitungen 130 und 131 elektrisch mit der Steuerung 1 verbunden. Geeignete Spannungskonverter können z.B. von der Endicott Research Group, Inc., 2601 Wayne St., Endicott NY 13760, USA bezogen werden. Ein besonders geeigneter Spannungskonverter ist der LSP 12-3-14 H Spannungskonverter der Endicott Research Group, Inc.. Der LSP 12-3-14 H Spannungskonverter transformiert eine 12V Gleichspannung in eine 120V Wechselspannung. Der Spannungskonverter 120 ist derart mit dem Seitenfenster 45 verbunden, dass er auch bei geschlossenem - also heraufbewegtem - Seitenfenster 45 zwischen der Außenverkleidung 121 und der Innenverkleidung 122 angeordnet ist.

Derartige Spannungskonverter können auch an den übrigen Fensterscheiben oder einem Teil der übrigen Fensterscheiben vorgesehen sein. Zudem kann vorgesehen sein, dass für jede PALC bzw. SPD Schicht je ein eigener Spannungskonverter mit der entsprechenden Fensterscheibe verbunden ist.

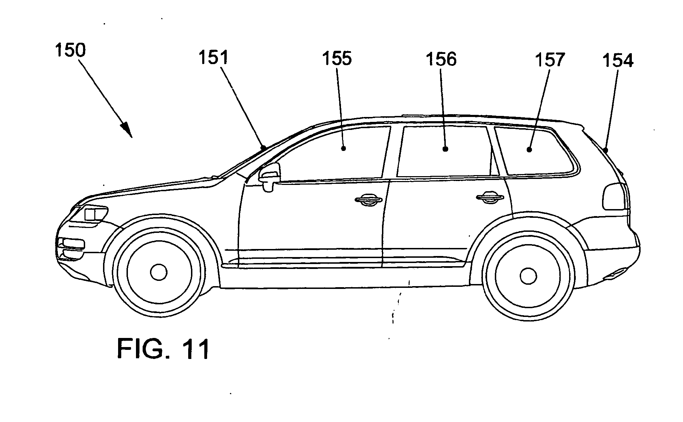

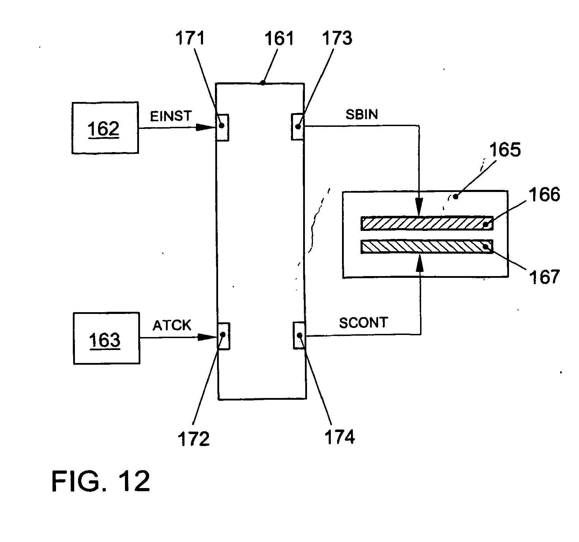

Fig. 11 zeigt ein Ausführungsbeispiel eines gepanzerten Kraftfahrzeuges 150 in einer Seitenansicht. Das gepanzerte Kraftfahrzeug 150 weist schussfeste Fensterscheiben 151, 154, 155, 156, 157 zum Abdecken eines Innenraums des gepanzerten Kraftfahrzeuges 150 auf, wobei eine Transparenz der schussfesten Rückscheibe 154 und der hinteren schussfesten Seitenfenster 156 und 157 einstellbar ist. Dabei werden die schussfeste Rückscheibe 154 und die hinteren schussfesten Seitenfenster 156 und 157 des gepanzerten Kraftfahrzeuges 150 im Sinne geringster Transparenz, insbesondere opak, eingestellt, wenn eine mit Bezugnahme auf Fig. 12 näher erläuterte Steuerung 161 eine Erschütterung erkennt, die geeignet wäre, eine herkömmliche Fensterscheibe eines Kraftfahrzeuges zu zerstören. Eine derartige Erschütterung kann z.B. das Einschlagen eines Geschosses oder ein schwerer Schlag sein.

Fig. 12 zeigt ein Ausführungsbeispiel der Steuerung 161 zur automatischen Einstellung einer Transparenz einer Fensterscheibe 165, die ein Ausführungsbeispiel der schussfesten Rückscheibe 154 und/oder der hinteren schussfesten Seitenfenster 156 und/oder 157 sein kann. Die Fensterscheibe 165 kann eine der PALC Schicht 16 entsprechende PALC Schicht 166 und/oder eine der SPD Schicht 17 entsprechenden SPD Schicht 167 umfassen, die durch über Schnittstellen 173 und 174 ausgebbare Steuersignale SBIN und SCONT ansteuerbar sind.

Das gepanzerte Kraftfahrzeug 150 weist eine Eingabevorrichtung 162 zur manuellen Einstellung der Transparenz der Fensterscheibe 165 mittels eines Signals EINST auf, das von der Steuerung 161 über eine Schnittstelle 171 eingelesen werden kann. Die Steuerung 161 erzeugt die Steuersignale SBIN und SCONT entsprechend dem Signal EINST.

Das gepanzerte Kraftfahrzeug 150 weist zudem einen Erschütterungssensor 163 zur Erfassung einer auf das gepanzerte Kraftfahrzeug 150 und/oder die schussfeste Fensterscheibe 165 einwirkenden Erschütterung und zur Ausgabe eines eine derartige Erschütterung anzeigenden Signals ATCK auf, das von der Steuerung 161 über eine Schnittstelle 172 einlesbar ist. Zeigt das Signal ATCK eine derartige Erschütterung an, so erzeugt die Steuerung 161 die Steuersignale SBIN und SCONT derart, dass die Fensterscheibe 165 ihre geringste Transparenz annimmt.

Das gepanzerte Kraftfahrzeug 150 kann einen dem Spannungskonverter 120 entsprechenden Spannungskonverter umfassen.

Die Elemente und Schichten in den Figuren sind unter Berücksichtigung von Einfachheit und Klarheit und nicht notwendigerweise maßstabsgetreu gezeichnet. So sind z.B. die Größenordnungen einiger Elemente bzw. Schichten übertrieben gegenüber anderen Elementen bzw. Schichten dargestellt, um das Verständnis der Ausführungsbeispiele der vorliegenden Erfindung zu verbessern.

**Bezugszeichenliste**

| | |
|---|---|
| 1, 14, 161 | Steuerung |
| 2, 162 | Eingabevorrichtung |
| 3 | Getriebe |

| | |
|---|---|
| 4 | Getriebesteuerung |
| 5 | Kleinkinderkennung |
| 6 | Datenbank |
| 7 | Personenerkennung |
| 8 | Sensorik zur Erkennung eines Unfalls |
| 9 | Navigationssystem |
| 10 | Datenbank |
| 11 | Satellit |
| 13 | Türschloss |
| 15, 60, 165 | Fensterscheibe |
| 16, 63, 166 | PALC Schicht |
| 17,65,167 | SPD Schicht |
| 18 | Transparenzsensor |
| 19 | LED |
| 20 | Photodiode |
| 21 | Klimaanlage |
| 22 | Nebelleuchte |
| 23 | Lichtsensor |
| 24 | Regensensor |
| 25 | Sonnenlichtsensor |
| 30 | Schlüssel |
| 40 | Kraftfahrzeug |
| 41, 151 | Frontscheibe |
| 42 | oberer Teil einer Frontscheibe |
| 43 | unterer Teil einer Frontscheibe |
| 44, 154 | Rückscheibe |
| 45, 46, 47, 55, 56, 57, 155, 156, 157 | Seitenfenster |
| 49,59 | Tür |
| 51 | Dachfenster |
| 53 | Emblem |
| 61,67 | Glasschicht |
| 62, 66 | PVB Schicht |
| 64 | Schicht aus PVB oder PU |
| 71, 73, 75, 77 | Elektrode |
| 72 | PALC Film |
| 76 | SPD Film |
| 80 | Ortsmodul |
| 81 | Regenmodul |
| 82 | Außenlichtmodul |
| 83 | Nebelmodul |
| 84 | Temperaturmanagementmodul |
| 85 | Schließmodul |
| 86 | Rückfahrmodul |
| 87 | Unfallmodul |
| 88 | Voreinstellungsmodul |
| 89 | Sonneneinstrahlungsmodul |
| 90 | Konfliktmanagementmodul |
| 91 | Kalibriervorrichtung |
| 92 101, 102, 103, 104, 105, 106, 107, 108, 109, 110, 111, 112, 113, 114, 115, 116, 117, 171, 172, 173, | Sicherheitsvorrichtung |
| 174 | Schnittstelle |
| 120 | Spannungskonverter |
| 121 | Außenverkleidung |
| 122, 123 | Innenverkleidung |
| 125 | Führung |

| 126 | Kreis |
| 130, 131 | Zuleitung |
| 150 | gepanzertes Kraftfahrzeug |
| 163 | Erschütterungssensor |
| ALTRG, HLGK, CRASH, RGN ATCK, BABY, CLIMA, EINST, LOCK, | Ausgangssignal |
| RGANG, SON | Signal |
| GEO | geographischer Ort |
| LAW | Informationen über herrschende gesetzliche Bestimmungen |
| NBL | Schaltzustand einer Nebelleuchte |
| SBIN, SBINRAW, SBIN1, SBIN5, SBIN6, SBIN7, SBIN8, SBIN9, SBIN10, SCONT, SCONTRAW, SCONT1, SCONT2, SCONT3, SCONT4, SCONT5, SCONT6, SCONT7, SCONT8, SCONT9 ,SCONT10 | Steuersignal |
| v | Geschwindigkteit |
| VOREIN | Informationen zur Voreinstellung von Fensterscheiben |

## Patentansprüche

1. Kraftfahrzeug mit mindestens einer Fensterscheibe (15, 60, 165) zum Abdecken eines Innenraums des Kraftfahrzeugs (40), wobei mindestens eine Transparenz einer Fensterscheibe (15, 60, 165) einstellbar ist, wobei das Kraftfahrzeug (40) eine Steuerung (1, 14, 161) zur automatischen Einstellung der Transparenz aufweist, mit der die Fensterscheibe (15, 60, 165) in Abhängigkeit eines ersten Betriebszustands des Kraftfahrzeugs (40) sowie mindestens eines zweiten Betriebszustands des Kraftfahrzeugs (40) einstellbar ist, wobei die Steuerung (1, 14, 161) ein Konfliktmanagementmodul (90) zur Ausgabe eines Steuersignals (SBINRAW SCONTRAW) in Abhängigkeit eines ersten Steuersignals zur Einstellung der Transparenz der Fensterscheibe in Abhängigkeit des ersten Betriebszustandes und zumindest eines zweiten Steuersignals zur Einstellung der Transparenz der Fensterscheibe in Abhängigkeit eines zweiten Betriebszustandes umfasst, wobei dem ersten Steuersignal eine Priorität und dem zweiten Steuersignal eine Priorität zugeordnet ist, **dadurch gekennzeichnet, dass** die Priorität eines Steuersignals (SBIN10, SCONT10) zur Einstellung der Transparenz einer von starker Sonneneinstrahlung betroffenen Fensterscheibe abhängig von einem eine Belegung eines Sitzes im Bereich der betreffenden Fensterscheibe durch ein Kleinkind anzeigenden Signal (BABY) ist.

2. Kraftfahrzeug nach Anspruch 1, **dadurch gekennzeichnet, dass** der Steuerung (1, 14, 161) mindestens ein Signal mindestens eines Erfassungsmoduls zugeführt wird, wobei das Erfassungsmodul (82, 89) eine Information über eine auf die Fensterscheibe (15, 60, 165) einwirkende Messgröße, insbesondere eine Sonneneinstrahlung oder Lichtmenge und/oder einen auf das Kraftfahrzeug (40) einwirkenden Regen in dem Ausgangssignal ausgibt.

3. Kraftfahrzeug nach einem der vorangehenden Ansprüche, **dadurch gekennzeichnet, dass** der Steuerung (1, 14, 161) mindestens ein Signal mindestens eines Erfassungsmoduls zugeführt wird, wobei das Erfassungsmodul (83) eine Information über einen Schaltzustand einer Lichtquelle, insbesondere einer Nebelleuchte (22) oder eines Nebelscheinwerfers (26), in dem Ausgangssignal ausgibt, und wobei die Transparenz der Fensterscheibe (15, 60, 165) bei eingeschalteter Nebelleuchte (22) oder eingeschaltetem Nebelscheinwerfer (26) erhöht wird.

4. Kraftfahrzeug nach einem der vorangehenden Ansprüche, **dadurch gekennzeichnet, dass** der Steuerung (1, 14, 161) mindestens ein Signal mindestens eines Erfassungsmoduls zugeführt wird, wobei das Erfassungsmodul (85,86) eine Information über einen Schaltzustand einer Innenbeleuchtung und/oder einer Türverriegelung und/oder einer Diebstahlwarnanlage und/oder eines eingelegten Vorwärts- oder Rückwärtsgangs eines Getriebes (3) und/oder den Zustand einer in dem Kraftfahrzeug (40) angeordneten Klimaanlage (21) in dem Ausgangssignal ausgibt.

5. Kraftfahrzeug nach einem der vorangehenden Ansprüche, **dadurch gekennzeichnet, dass** der Steuerung (1, 14, 161) mindestens ein Signal mindestens eines Erfassungsmoduls zugeführt wird, wobei das Erfassungsmodul eine Information über eine Belegung des Fahrzeuginnenraums, insbesondere die Belegung der unterschiedlichen Sitze oder eine Beladung eines Kofferraums des Kraftfahrzeugs (40), in dem Ausgangssignal ausgibt.

6. Kraftfahrzeug nach einem der vorangehenden Ansprüche, **dadurch gekennzeichnet, dass** der Steuerung (1, 14, 161) mindestens ein Signal mindestens eines Erfassungsmoduls zugeführt wird, wobei das Erfassungsmodul (87) eine Information über eine Unfallsituation in dem Ausgangssignal ausgibt und die Steuerung (1, 14, 161) bei erkannter Unfallsituation die Transparenz der Fensterscheibe erhöht oder auf den höchsten Wert (15, 60, 165) einstellt.

7. Kraftfahrzeug nach einem der vorangehenden Ansprüche, **dadurch gekennzeichnet, dass** der Steuerung (1, 14, 161) mindestens ein Signal mindestens eines Erfassungsmoduls zugeführt wird, wobei das Erfassungsmodul (80) eine Information über den aktuellen geographischen Ort des Kraftfahrzeugs (40) enthält, wobei in Abhängigkeit des geographischen Orts die Transparenz der Fensterscheibe (15, 60, 165) eingestellt wird.

8. Kraftfahrzeug nach einem der vorangehenden Ansprüche, **dadurch gekennzeichnet, dass** der Steuerung (1, 14, 161) mindestens ein Signal mindestens eines Erfassungsmoduls zugeführt wird, wobei das Erfassungsmodul eine Information über eine Erschütterung des Kraftfahrzeugs (40) oder der Karosserie des Kraftfahrzeugs (40) oder einer Fensterscheibe (15, 60, 165) in dem Ausgangssignal ausgibt.

9. Kraftfahrzeug nach Anspruch 8, **dadurch gekennzeichnet, dass** die Transparenz einer oder mehrerer Fensterscheiben erniedrigt oder auf den niedrigsten Wert eingestellt wird, wenn die Erschütterung des Kraftfahrzeugs (40) oder der Karosserie des Kraftfahrzeugs (40) oder das Erschütterungssignal mindestens einen Schwellwert überschreitet.

10. Kraftfahrzeug nach einem der vorangehenden Ansprüche, **dadurch gekennzeichnet, dass** der erste Betriebszustand oder der zweite Betriebszustand eine auf das Kraftfahrzeug (40) einwirkenden Lichtmenge umfasst.

11. Kraftfahrzeug nach einem der vorangehenden Ansprüche, **dadurch gekennzeichnet, dass** an mindestens einer Fensterscheibe (15, 60, 165) mindestens ein Transparenzsensor (18) zum Messen der Transparenz der Fensterscheibe (15, 60, 165) angeordnet ist.

12. Kraftfahrzeug nach Anspruch 11, **dadurch gekennzeichnet, dass** das Kraftfahrzeug (40) eine Kalibriervorrichtung (91) umfasst und mindestens ein gemessener Transparenzwert der Kalibriervorrichtung (91) oder der Steuerung (1, 14, 161) zur automatischen Veränderung eines Steuerungssignals zur automatischen Veränderung der Transparenz der Fensterscheibe (15, 60, 165) zuführbar ist.

## Claims

1. Motor vehicle with at least one vehicle pane (15, 60, 165) for covering the passenger compartment of the vehicle (40), wherein at least the transparency of a window pane (15, 60, 165) can be adjusted, wherein the motor vehicle (40) has a controller (1, 14, 161) for automatically setting the transparency with which the window pane (15, 60, 165) can be set as a function of a first operating state of the motor vehicle (40) and of at least a second operating state of the motor vehicle (40), wherein the controller (1, 14, 161) comprises a conflict management module (90) for outputting a control signal (SBINRAW, SCONTRAW) as a function of a first control signal for setting the transparency of the window pane as a function of the first operating state and at least a second control signal for setting the transparency of the window pane as a function of a second operating state, wherein one priority is assigned to the first control signal, and one priority is assigned to the second control signal, **characterized in that** the priority of a control signal (SBIN10, SCONT10) for setting the transparency of a window pane which is affected by strong solar radiation is dependent on a signal which indicates occupation of a seat in the region of the respective window pane by a small child (BABY).

2. Motor vehicle according to Claim 1, **characterized in that** at least one signal of at least one sensing module is fed to the controller (1, 14, 161), wherein the sensing module (82, 89) outputs information about a measurement variable acting on the window pane (15, 60, 165), in particular a solar radiation value or quantity of light and/or a value for rain acting on the motor vehicle (40), in the output signal.

3. Motor vehicle according to one of the preceding claims, **characterized in that** at least one signal of at least one sensing module is fed to the controller (1, 14, 161), wherein the sensing module (83) outputs information about a switched state of a light source, in particular a fog light (22) or a fog headlight (26), in the output signal, and wherein the transparency of the window pane (15, 60, 165) is increased when the fog light (22) is switched on or the fog headlight (26) is switched on.

**4.** Motor vehicle according to one of the preceding claims, **characterized in that** at least one signal of at least one sensing module is fed to the controller (1, 14, 161), wherein the sensing module (85, 86) outputs information about a switched state of an interior lighting and/or a door lock and/or an anti-theft warning system and/or an engaged forward gearspeed or reverse gearspeed of a transmission (3) and/or the state of an air-conditioning system (21) arranged in the motor vehicle (40) in the output signal.

**5.** Motor vehicle according to one of the preceding claims, **characterized in that** at least one signal of at least one sensing module is fed to the controller (1, 14, 161), wherein the sensing module outputs information about occupation of the passenger compartment of the vehicle, in particular the occupation of the different seats or loading of a luggage compartment of the motor vehicle (40), in the output signal.

**6.** Motor vehicle according to one of the preceding claims, **characterized in that** at least one signal of at least one sensing module is fed to the controller (1, 14, 161), wherein the sensing module (87) outputs information about an accident situation in the output signal, and when an accident situation is detected the controller (1, 14, 161) increases the transparency of the window pane or sets it to the highest value (15, 60, 165).

**7.** Motor vehicle according to one of the preceding claims, **characterized in that** at least one signal of at least one sensing module is fed to the controller (1, 14, 161), wherein the sensing module (80) contains information about the current geographical location of the motor vehicle (40), wherein the transparency of the window pane (15, 60, 165) is set as a function of the geographical location.

**8.** Motor vehicle according to one of the preceding claims, **characterized in that** at least one signal of at least one sensing module is fed to the controller (1, 14, 161), wherein the sensing module outputs information about shocks to the motor vehicle (40) or to the bodywork of the motor vehicle (40) or to a window pane (15, 60, 165) in the output signal.

**9.** Motor vehicle according to Claim 8, **characterized in that** the transparency of one or more window panes is decreased or set to the lowest value if the shocks to the motor vehicle (40) or to the bodywork of the motor vehicle (40) or the shock signal exceeds at least one threshold value.

**10.** Motor vehicle according to one of the preceding claims, **characterized in that** the first operating state or the second operating state comprises a quantity of light acting on the motor vehicle (40).

**11.** Motor vehicle according to one of the preceding claims, **characterized in that** at least one transparency sensor (18) for measuring the transparency of the window pane (15, 60, 165) is arranged on at least one window pane (15, 60, 165).

**12.** Motor vehicle according to Claim 11, **characterized in that** the motor vehicle (40) comprises a calibration device (91), and at least one measured transparency value can be fed to the calibration device (91) or to the controller (1, 14, 161) in order to automatically change a control signal in order to automatically change the transparency of the window pane (15, 60, 165).

**Revendications**

**1.** Véhicule automobile comprenant au moins un carreau de fenêtre (15, 60, 165) pour recouvrir un espace intérieur du véhicule automobile (40), au moins une transparence d'un carreau de fenêtre (15, 60, 165) étant réglable, le véhicule automobile (40) présentant une commande (1, 14, 81) pour le réglage automatique de la transparence, avec laquelle le carreau de fenêtre (15, 60, 165) peut être réglé en fonction d'un premier état opérationnel du véhicule automobile (40) et aussi d'au moins un deuxième état opérationnel du véhicule automobile (40), la commande (1, 14, 161) comprenant un module de gestion de conflit (90) pour délivrer un signal de commande (SBINRAW, SCONTRAW) en fonction d'un premier signal de commande pour régler la transparence du carreau de fenêtre en fonction du premier état opérationnel et d'au moins un deuxième signal de commande pour régler la transparence du carreau de fenêtre en fonction d'un deuxième état opérationnel, une priorité étant associée au premier signal de commande et une priorité étant associée au deuxième signal de commande, **caractérisé en ce que** la priorité d'un premier signal de commande (SBIN10, SCONT10) destiné à régler la transparence d'un carreau de fenêtre atteint par un fort rayonnement solaire est dépendante d'un signal indiquant une occupation d'un siège dans la zone du carreau de fenêtre concerné par un enfant en bas âge (BABY).

**2.** Véhicule automobile selon la revendication 1, **caractérisé en ce qu'**au moins un signal d'au moins un module d'acquisition est acheminé à la commande (1, 14, 161), le module d'acquisition (82, 89) délivrant dans le signal de sortie une information sur une grandeur mesurée agissant sur le carreau de fenêtre (15, 60, 165), notamment un rayonnement solaire ou une quantité de lumière et/ou une pluie agissant sur le véhicule automobile (40).

**3.** Véhicule automobile selon l'une des revendications précédentes, **caractérisé en ce qu'**au moins un signal d'au moins un module d'acquisition est acheminé à la commande (1, 14, 161), le module d'acquisition (83) délivrant dans le signal de sortie une information sur un état de commutation d'une source de lumière, notamment d'un feu de brouillard (22) ou d'un phare antibrouillard (26) et la transparence du carreau de fenêtre (15, 60, 165) étant augmentée lorsque le feu de brouillard (22) ou le phare antibrouillard (26) est allumé.

**4.** Véhicule automobile selon l'une des revendications précédentes, **caractérisé en ce qu'**au moins un signal d'au moins un module d'acquisition est acheminé à la commande (1, 14, 161), le module d'acquisition (85, 86) délivrant dans le signal de sortie une information sur un état de commutation d'un éclairage intérieur et/ou d'un verrouillage de portière et/ou d'un système d'alarme antivol et/ou d'une marche avant ou marche arrière engagée d'une boîte de vitesses (3) et/ou sur l'état d'un équipement de climatisation (21) installé dans le véhicule automobile (40).

**5.** Véhicule automobile selon l'une des revendications précédentes, **caractérisé en ce qu'**au moins un signal d'au moins un module d'acquisition est acheminé à la commande (1, 14, 161), le module d'acquisition délivrant dans le signal de sortie une information sur une occupation d'un espace intérieur du véhicule, notamment sur l'occupation des différents sièges ou une occupation d'un coffre du véhicule automobile (40).

**6.** Véhicule automobile selon l'une des revendications précédentes, **caractérisé en ce qu'**au moins un signal d'au moins un module d'acquisition est acheminé à la commande (1, 14, 161), le module d'acquisition (87) délivrant dans le signal de sortie une information sur une situation d'accident et la commande (1, 14, 161), lorsqu'une situation d'accident est reconnue, augmente la transparence du carreau de fenêtre (15, 60, 165) ou la règle à la valeur la plus élevée.

**7.** Véhicule automobile selon l'une des revendications précédentes, **caractérisé en ce qu'**au moins un signal d'au moins un module d'acquisition est acheminé à la commande (1, 14, 161), le module d'acquisition (80) contenant une information sur la position géographique actuelle du véhicule automobile (40), la transparence du carreau de fenêtre (15, 60, 165) étant réglée en fonction de la position géographique.

**8.** Véhicule automobile selon l'une des revendications précédentes, **caractérisé en ce qu'**au moins un signal d'au moins un module d'acquisition est acheminé à la commande (1, 14, 161), le module d'acquisition délivrant dans le signal de sortie une information sur une vibration du véhicule automobile (40) ou de la carrosserie du véhicule automobile (40) ou d'un carreau de fenêtre (15, 60, 165).

**9.** Véhicule automobile selon la revendication 8, **caractérisé en ce que** la transparence d'un ou de plusieurs carreaux de fenêtre est réduite ou réglée à la valeur la plus faible lorsque la vibration du véhicule automobile (40) ou de la carrosserie du véhicule automobile (40) ou le signal de vibration dépasse au moins une valeur de seuil.

**10.** Véhicule automobile selon l'une des revendications précédentes, **caractérisé en ce que** le premier état opérationnel ou le deuxième état opérationnel comprend une quantité de lumière qui agit sur le véhicule automobile (40).

**11.** Véhicule automobile selon l'une des revendications précédentes, **caractérisé en ce qu'**au moins un détecteur de transparence (18) est installé sur au moins un carreau de fenêtre (15, 60, 165) pour mesurer la transparence du carreau de fenêtre (15, 60, 165).

**12.** Véhicule automobile selon la revendication 11, **caractérisé en ce que** le véhicule automobile (40) comprend un dispositif de calibrage (91) et au moins une valeur mesurée de la transparence peut être acheminée au dispositif de calibrage (91) ou à la commande (1, 14, 161) pour modifier automatiquement un signal de commande en vue de modifier automatiquement la transparence du carreau de fenêtre (15, 60, 165).

**FIG. 1**

FIG. 2

FIG. 3

**FIG. 4**

60

61
63
65
67

62
64
66

## FIG. 5

63

71
73

72

## FIG. 6

65

75
77

76

## FIG. 7

FIG. 8

45

120

126

122

121

125

123

49

FIG. 9

FIG. 10

FIG. 11

FIG. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6674419 B
- US 6597412 B
- US 6522446 B
- US 6606185 B
- US 6301040 B
- EP 0608203 B1
- DE 10057795 A1